**Europäisches Patentamt**

**European Patent Office**

**Office européen des brevets**

(19)

(11) Veröffentlichungsnummer: **0 306 854 B1**

(12) # EUROPÄISCHE PATENTSCHRIFT

(45) Veröffentlichungstag der Patentschrift :
**17.07.91 Patentblatt 91/29**

(51) Int. Cl.$^5$ : **B29B 9/06**

(21) Anmeldenummer : **88114357.2**

(22) Anmeldetag : **02.09.88**

(54) Vorrichtung zum Abkühlen und Granulieren von Strängen aus thermoplastischen Kunststoffen.

Verbunden mit 88907289.8 (europäische
Anmeldenummer) durch Entscheidung vom
8.10.1990.

(30) Priorität : **04.09.87 DE 3729686**

(43) Veröffentlichungstag der Anmeldung :
**15.03.89 Patentblatt 89/11**

(45) Bekanntmachung des Hinweises auf die
Patenterteilung :
**17.07.91 Patentblatt 91/29**

(84) Benannte Vertragsstaaten :
**AT BE CH DE ES FR GB IT LI NL**

(56) Entgegenhaltungen :
**DE-A- 2 503 455**
**DE-A- 2 655 840**
**US-A- 2 895 165**

(73) Patentinhaber : **AUTOMATIK
APPARATE-MASCHINENBAU GMBH
Ringheim/Ostring 19
W-8754 Grossostheim 2 (DE)**

(72) Erfinder : **Hunke, Friedrich, Dipl. Ing.,
38 Westring
W-8754 Grossostheim 2 (DE)**

(74) Vertreter : **Bardehle, Heinz, Dipl.-Ing. et al
Patent- und Rechtsanwälte
Bardehle-Pagenberg-Dost-Altenburg-Frohwitter-Geissl
& Partner Postfach 86 06 20
W-8000 München 86 (DE)**

EP 0 306 854 B1

## Beschreibung

Die Erfindung bezieht sich auf eine Vorrichtung zum Abkühlen und Granulieren von aus Düsen austretenden Strängen aus thermoplastischen Kunststoffen mit zwei im wesentlichen spiegelbildlich mit dem Rücken zueinander angeordneten Ablaufrinnen, deren oberes Ende einer Kühlwasserzuführung ausgesetzt und deren unteres Ende auf den Eingang eines Granulierers mit Einzugswalzen und Schneidwalze gerichtet sind, wobei die Ablaufrinnen gegenüber der Verbindungslinie von den Düsen und dem Eingang der Einzugswalzen zwischen den Düsen und dem Einzugswalzeneingang in Richtung auf die Stränge vorspringen und von Sprühdüsen zwecks Kühlung der Stränge beaufschlagt sind.

Eine derartige Vorrichtung ist aus der DE-PS 26 55 840 bekannt. Dieser Vorrichtung liegt die Aufgabe zugrunde, einen besonders hohen Durchsatz zu ermöglichen, wozu die beiden im wesentlichen spiegelbildlich mit dem Rücken zueinander angeordneten Ablaufrinnen vorgesehen sind. Aufgrund der Anordnung zweier Ablaufrinnen wird der Durchsatz gegenüber nur einer einzigen Ablaufrinne, wie sie aus der DE-PS 25 03 455 bekannt ist, verdoppelt, wobei diese Verdoppelung sich im wesentlichen aus der Verdoppelung der Zahl der Stränge ergibt. Die Gestaltung jeder der beiden Ablaufrinnen gemäß der DE-PS 26 55 840, die gemäß der Offenbarung dieser Druckschrift starr zueinander angeordnet sind, folgt im wesentlichen den Lehren der DE-PS 25 03 455, wonach durch das Vorspringen der Ablaufrinnen zwischen den Düsen und den Einzugswalzen den Strängen eine sichere Führung gegeben wird. Dabei offenbart die DE-PS 25 03 455 gemäß ihrem Anspruch 6 auch die Möglichkeit, das Maß dieses Vorspringens verstellbar zu machen.

Der Erfindung liegt die Aufgabe zugrunde, eine technisch günstig durchführbare Anpassbarkeit der Vorrichtung an die verschiedensten Kunststoffstränge zu schaffen und dabei eine besonders intensive Kühlwirkung zu erzielen. Erfindungsgemäß geschieht dies dadurch, daß die auf die Düsen und die Einzugswalzen zuweisenden Enden der Ablaufrinnen je durch ein Paar Leitbleche gebildet sind, die einen freien Fallraum einschließend übereinander angeordnet jeweils eine Ablaufrinne formen, wobei die Leitbleche jedes Paares seitlich derart voneinander entfernbar sind, daß sich mit zunehmender Entfernung der Vorsprung der betreffenden Ablaufrinne gegenüber der Verbindungslinie zwecks Erhöhung der Spannung der zu granulierenden Stränge, vergrößert.

Aufgrund der Anordnung zweier übereinander mit Abstand voneinander liegender Paare von Leitblechen lassen sich in großer Variationsbreite sowohl verschieden große Vorsprünge als auch im Bezug auf die Senkrechte verschiedene Schräglagen der geführten Stränge herbeiführen, da durch die individuell einstellbare Entfernung der Leitbleche jedes Paares die Führung der Stränge im oberen und unteren Bereich der dadurch gebildeten Ablaufrinnen entsprechend individuell gestaltet werden kann, wobei durch die Zwischenschaltung des freien Fallraums zwischen den beiden Paaren von Leitblechen die diesen Fallraum duchlaufenden Stränge allseitig einer intensiven Kühlung ausgesetzt werden können, ohne daß diese Kühlung in diesem Bereich durch Auflage der Stränge auf einem Leitblech behindert werden kann. Die von den Sprühdüsen in diesen Bereich auf die Stränge aufgesprühte Kühlflüssigkeit kann sich also hier besonders intensiv auswirken.

Zweckmäßig hängt man die Leitbleche jedes Paares an ihrem oberen Ende an einer gemeinsamen Drehachse auf, wobei ihre der Drehachse abgewandten Enden durch eine zwischen den Leitblechen jedes Paares angeordnete Spreizeinrichtung voneinander entfernbar sind. Aufgrund einer solchen Gestaltung ist es möglich, die durch die beiden Paare von Leitblechen gebildeten Ablaufrinnen lediglich durch einfaches Verdrehen der Leitbleche jedes Paares im Sinne eines Spreizvorganges voneinander zu entfernen, d.h., daß es sich bei der Aufhängung der Leitbleche um eine einfache konstruktive Ausbildung handelt.

Damit die Leitbleche lediglich durch von innen wirkende Druckorgane verstellt werden können, ordnet man zwischen ihnen zweckmäßig eine Zugfeder an, die die Leitbleche jedes Paares zusammenzieht. Es können dann zwischen den Leitblechen beliebige Druckorgane, z.B. Exzenter oder dergleichen, angeordnet werden, um die gewünschte Verstellung der Leitbleche herbeizuführen.

In den Figuren sind Ausführungsbeispiele der Erfindung dargestellt. Es zeigen

Figur 1    die Vorrichtung mit zwei Paaren von Leitblechen, die jeweils an einer Drehachse aufgehängt sind,

Figur 2    ein einzelnes Paar von Leitblechen, mit Einrichtungen zur Parallelverschiebung,

Figur 3    in prinzipieller Darstellung die räumliche Anordnung der Stränge zueinander unmittelbar nach Verlassen der Düsen und direkt vor dem Eintritt in die Einzugswalzen.

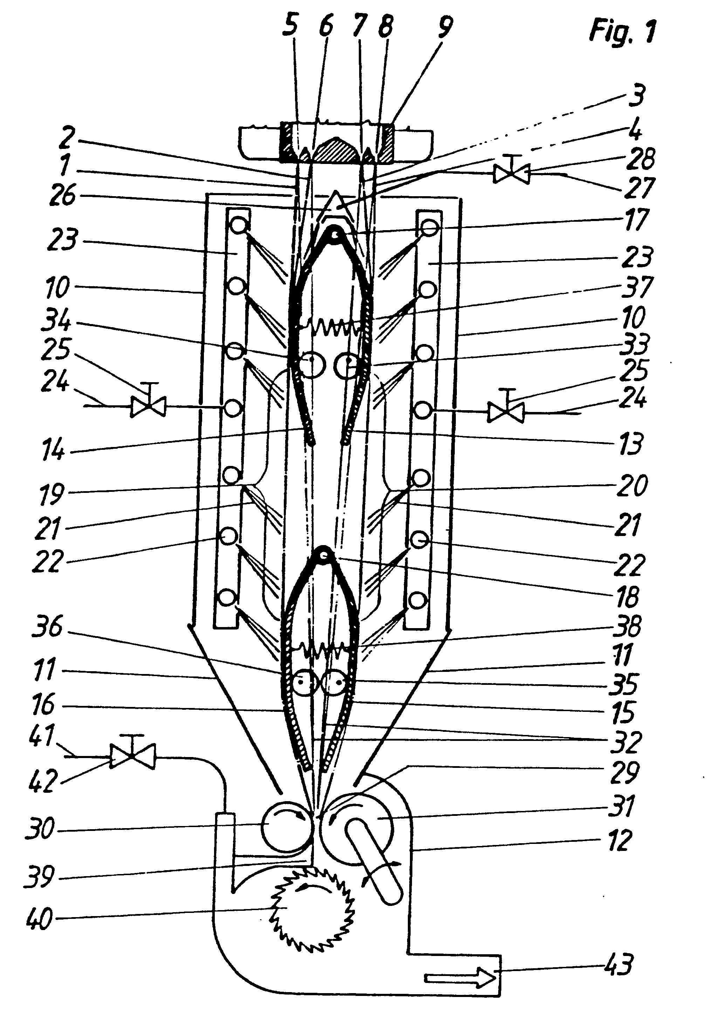

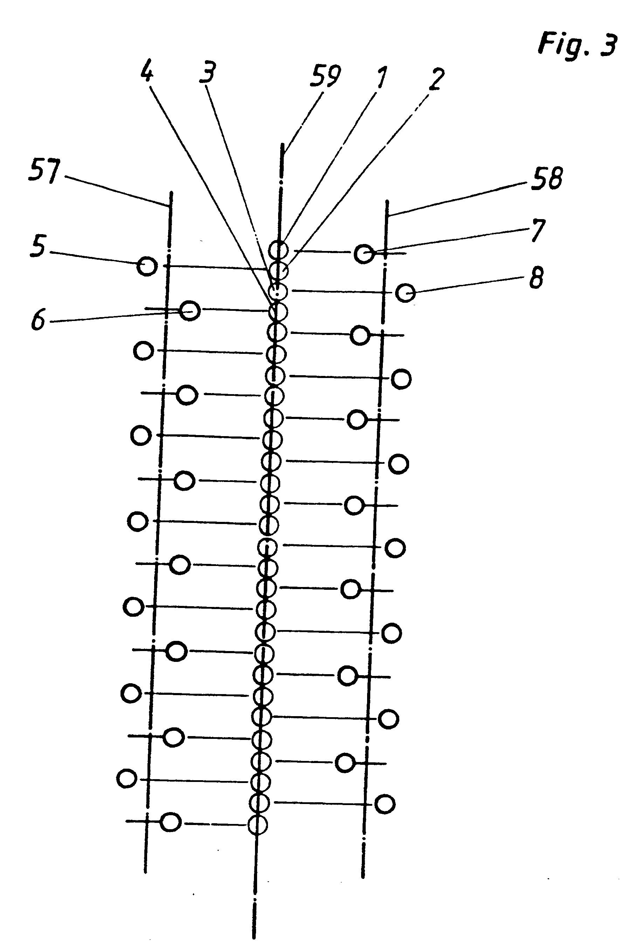

In der Figur 1 ist eine Vorrichtung zum Abkühlen und Granulieren von durch strichpunktierten Linien dargestellten Strängen 1, 2 und 3, 4 aus thermoplastischen Kunststoffen wiedergegeben, wobei die Stränge aus Reihen von Düsen 5, 6 und 7, 8 austreten (siehe auch Figur 3). Die Düsen 5, 6 und 7, 8 sind in der Düsenplatte 9 untergebracht.

Unterhalb der Düsenplatte 9 befindet sich das längliche Gehäuse 10, das im wesentlichen aus einem oben

2

offenen Blechmantel besteht, der unten über den konischen Auslauf 11 auf den Granulator 12 zuweist. In dem Gehäuse 10 sind die Leitbleche 13, 14 und 15, 16 angeordnet, die jeweils ein Paar 13/14 bzw. 15/16 bilden. Die Leitbleche 13, 14 sind an ihrem oberen Ende an der gemeinsamen Drehachse 17 aufgehängt, die Leitbleche 15, 16 hängen an der gemeinsamen Drehachse 18. In ihrer Aufeinanderfolge formen die Leitbleche 13, 15 bzw. 14, 16 jeweils eine Ablaufrinne für die Stränge 1, 2 bzw. 3, 4, wobei die jeweilige Ablaufrinne durch den freien Fallraum 19 bzw. 20 unterbrochen ist. In dem freien Fallraum 19 bzw. 20 sind die Stränge 1, 2 bzw. 3, 4 von allen Seiten der Beaufschlagung von Wasserstrahlen 21 frei zugänglich, die aus Sprühdüsen 22 austreten. Auf jeder Seite der Leitbleche 13, 14 bzw. 15, 16 sind jeweils sieben derartiger Sprühdüsen 22 jeweils auf einem Träger 23 angeordnet. Die Sprühdüsen 22 werden mit Sprühflüssigkeit, insbesondere Kühlwasser, über die Zuleitungen 24 versorgt, in die jeweils Regelventile 25 eingeschaltet sind. Oberhalb des Paares von Leitflächen 13, 14 ist die Kühlwasserzuführung 26 vorgesehen, die mit Kühlwasser über die Zuleitung 27 und das Regelventil 28 versorgt wird.

In die Figur 1 sind von den Düsen 5, 6 bzw. 7, 8 zum Eingang 29 der beiden Einzugswalzen 30, 31 führende, gestrichelt dargestellte Verbindungslinien 32 eingezeichnet, denen gegenüber die äußeren Oberflächen der Leitbleche 13, 14 bzw. 15, 16 vorspringen, so daß die aus den Düsen 5, 6 bzw. 7, 8 austretenden Stränge 1, 2 bzw. 3, 4 gegenüber diesen Verbindungslinien 32 über einen Umweg zu dem Eingang 29 durchlaufen müssen, wodurch die Stränge 1, 2 bzw. 3, 4 eine bestimmte gewünschte Spannung und damit Führung durch die Leitbleche 13, 14 bzw. 15, 16 erhalten.

Der Grad des Vorspringens der Leitbleche 13, 14 bzw. 15, 16 gegenüber den Verbindungslinien 32 läßt sich nun dadurch einstellen, daß die Leitbleche mehr oder minder voneinander entfernt werden. Hierzu dienen gemäß Figur 1 die drehbaren Exzenter 33, 34 für die Leitbleche 13, 14 und die drehbaren Exzenter 35, 36 für die Leitbleche 15, 16. Wie aus Figur 1 ersichtlich, sind die beiden Exzenter 33, 34 der beiden oberen Leitbleche 13, 14 weiter gegenüber lediglich durch einen Punkt dargestellten Achsen verdreht als die Exzenter 35, 36 so daß die Leitbleche 13, 14 weiter voneinander entfernt sind als die Leitbleche 15, 16. Je nach zu verarbeitendem Material lassen sich nun die Leitbleche 13, 14 und 15, 16 je nach Einstellung der Exzenter 33, 34 bzw. 35, 36 hinsichtlich ihrer Entfernung voneinander einstellen, was bei unterschiedlicher Verdrehung der genannten Exzenter auch individuell unterschiedlich sein kann. Die in Figur 1 dargestellte Vorrichtung ist damit universell an alle möglichen zu verarbeitenden in Strängen vorliegenden thermoplastischen Kunststoffe anpaßbar. Damit nun ständig die Exzenter 33, 34 bzw. 35, 36 von innen her gegen die Leitbleche 13, 14 bzw. 15, 16 anliegen, sind die beiden Zugfedern 37, 38 vorgesehen, die den Leitblechen die erforderliche nach innen gerichtete Vorspannung geben.

Bei dem in der Figur 1 noch dargestellten Granulator 12 handelt es sich um ein bekanntes Gerät, bestehend aus den beiden Einzugswalzen 30, 31 und der mit dem Gegenmesser 39 zusammenarbeitenden Messerwalze 40. Der Granulator 12 wird über die Zuleitung 41 und das Regelventil 42 mit Kühlwasser versorgt. Das erzeugte Granulat wird zusammen mit dem Kühlwasser am Ausgang 43 des Granulators abgegeben. Im übrigen wird hierzu auf die DE-PS 26 55 840 verwiesen.

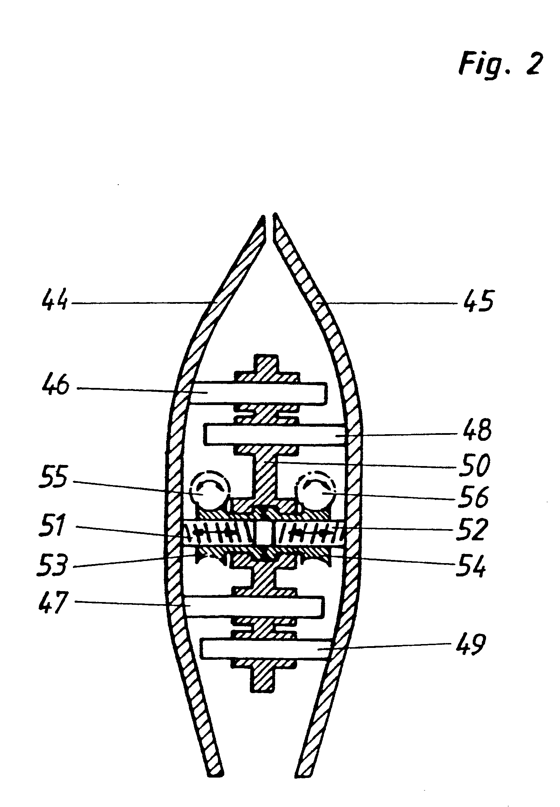

In der Figur 2 ist eine andersartige Gestaltung eines Paares von Leitblechen 44, 45 dargestellt, bei der diese parallel verschiebbar angeordnet sind. Die Leitbleche 44, 45 weisen nach innen gerichtete Führungsstangen 46, 47 bzw. 48, 49 auf, die in entsprechenden Führungen eines gemeinsamen Trägers 50 längs verschiebbar gelagert sind. Die Leitbleche 44, 45 erhalten ihren Antrieb hierfür über an ihnen befestigte Verstellspindeln 51, 52, auf die drehbare Mutterstücke 53, 54 aufgeschraubt sind. Diese Mutterstücke 53, 54 sind an ihrem äußeren Umfang als Schnecken ausgebildet, in die die Antriebsspindeln als Schnecken ausgebildet in die Antriebsspindeln 55, 56 eingreifen. Bei Verdrehung der Antriebsspindeln 55, 56 werden die Leitbleche 44, 45 entsprechend seitlich parallel verschoben, wobei je nach Verdrehung der Antriebsspindel 55, 56 natürlich eine gemeinsame oder individuelle Verstellung möglich ist.

Die durch die Vorrichtung erzielbare Vergrößerung des Durchsatzes läßt sich anschaulich anhand der Figur 3 verdeutlichen. Figur 3 zeigt die Düsen 5, 6 bzw. 7, 8, die symmetrisch zu den strichpunktiert gezeichneten Mittellinien 57 bzw. 58 in der Düsenplatte 9 angeordnet sind. Gemäß Figur 3 enthält die Düsenplatte 9 jeweils sieben Düsen 5, 6, 7 und 8 in Längsrichtung entlang der Mittellinie 57, 58 nebeneinander angeordnet. Die aus den Düsen 5, 6 bzw. 7, 8 austretenden Stränge 1, 2 bzw. 3, 4 werden dann durch die Vorrichtung gemäß Figur 1 hindurchgeleitet und gelangen schließlich zum Eingang 29 des Granulators 12, wo sie praktisch unmittelbar nebeneinander entlang der Mittellinie 59 liegen. Hier sind die Stränge 1, 2 bzw 3, 4 bereits soweit abgekühlt, daß sie sich ohne weiteres berühren können, ohne miteinander zu verkleben.

## Patentansprüche

1. Vorrichtung zum Abkühlen und Granulieren von aus Düsen austretenden Strängen aus thermoplastischen Kunststoffen mit zwei im wesentlichen spiegelbildlich mit dem Rücken zueinander angeordneten Ablaufrinnen, deren oberes Ende einer Kühlwasserzuführung ausgesetzt und deren unteres Ende auf den Eingang eines Granulierers mit Einzugswalzen und Schneidwalze gerichtet sind, wobei die Ablaufrinnen gegenüber der Verbindungslinie von den Düsen und dem Eingang der Einzugswalzen zwischen den Düsen und dem Einzugswalzeneingang in Richtung auf die Stränge vorspringen und von Sprühdüsen zwecks Kühlung der Stränge beaufschlagt sind, **dadurch gekennzeichnet**, daß die auf die Düsen (5, 6 ; 7, 8) und die Einzugswalzen (30, 31) zuweisenden Enden der Ablaufrinnen je durch ein Paar Leitbleche (13, 14, 15, 16 ; 44, 45) gebildet sind, die einen freien Fallraum (19, 20) einschließend übereinander angeordnet jeweils eine Ablaufrinne formen, wobei die Leitbleche (13, 14, 15, 16 ; 44, 45) jedes Paares seitlich derart voneinander entfernbar sind, daß sich mit zunehmender Enfernung der Vorsprung der betreffenden Ablaufrinne gegenüber der Verbindungslinie (32) zwecks Erhöhung der Spannung der zu granulierenden Stränge (1, 2 ; 3, 4) vergrößert.

2. Vorrichtung nach Anspruch 1, **dadurch gekennzeichnet**, daß die Leitbleche (13, 14, 15, 16 ; 44, 45) jedes Paares an ihrem oberen Ende an einer gemeinsamen Drehachse (17, 18) aufgehängt sind und ihre der Drehachse (18) abgewandten Enden durch eine zwischen den Leitblechen (13, 14, 15, 16 ; 44, 45) jedes Paares angeordnete Spreizeinrichtung (33, 34 ; 35, 36) voneinander entfernbar sind.

3. Vorrichtung nach Anspruch 1 oder 2, **dadurch gekennzeichnet**, daß die Leitbleche (13, 14, 15, 16 ; 44, 45) durch eine zwischen ihnen angeordnete Zugfeder (37, 38) zusammengezogen werden.

## Claims

1. Device for cooling and granulating thermoplastic strands emerging from extrusion dies and having two channels arranged essentially symmetrically back-to-back, the upper end thereof being connected to a supply of cooling water and the lower end thereof being directed towards the inlet of a granulator having draw-in rollers and cutting roller, the channels projecting beyond the connecting line of the extrusion dies and the inlet of the draw-in rollers between the extrusion dies and the draw-in roller inlet in the direction of the strands, and being exposed to spraying nozzles for the purpose of cooling the strands, characterised in that the ends of the channels pointing towards the extrusion dies (5, 6 ; 7, 8) and the draw-in rollers (30, 31) are each formed by a pair of superposed baffle plates (13, 14, 15, 16 ; 44, 45) which enclose an open descent space (19, 20) to form a channel in each case, it being possible for the baffle plates (13, 14, 15, 16 ; 44, 45) of each pair to be separated laterally from one another, such that the distance between the projection of the respective channel and the connecting line (32) increases for the purpose of increasing the tension of the strands (1, 2 ; 3, 4) to be granulated.

2. Device according to claim 1, characterised in that the baffle plates (13, 14, 15, 16 ; 44, 45) of each pair are suspended at their upper end on a common rotational axis (17, 18) and their ends facing away from the rotational axis (18) can be separated from one another by means of a spreading device (33, 34 ; 35, 36) arranged between the baffle plates (13, 14, 15, 16 ; 44, 45) of each pair.

3. Device according to claim 1 or 2, characterised in that the baffle plates (13, 14, 15, 16 ; 44, 45) are drawn together by means of a tension spring (37, 38) arranged between them.

## Revendications

1. Dispositif pour refroidir et granuler des cordons de matières thermoplastiques sortant de filières d'extrusion, avec deux rigoles d'écoulement qui sont disposées avec leur dos sensiblement symétriquement l'une par rapport à l'autre, et dont l'extrémité supérieure est exposée à un apport d'eau de refroidissement, tandis que leur extrémité inférieure est dirigée vers l'entrée d'un granulateur muni de cylindres d'alimentation et d'un cylindre de coupe, les rigoles d'écoulement dépassant, par rapport à la ligne de jonction des filières et de l'entrée des cylindres d'alimentation, en direction des cordons entre les filières et l'entrée des cylindres d'alimentation, et les rigoles d'écoulement étant alimentées par des buses de pulvérisation en vue de refroidir les cordons, **caractérisé** en ce que les extrémités des rigoles d'écoulement qui sont tournées vers les filières (5, 6 ; 7, 8) et vers les cylindres d'alimentation (30, 31) sont respectivement constituées d'une paire de tôles de guidage (13, 14, 15, 16 ; 44, 45), qui forment chaque fois une rigole d'écoulement en étant superposées en incluant un espace de chute libre (19, 20), les tôles de guidage (13, 14, 15, 16 ; 44, 45) de chaque paire pouvant être écartées latéralement l'une de l'autre de telle sorte que, tandis que l'écartement augmente, le dépassement de la rigole d'écoulement concernée par rapport à la ligne de jonction (32) augmente, en vue d'augmenter la tension des cordons (1, 2 ; 3, 4) à granuler.

2. Dispositif selon la revendication 1, caractérisé en ce que les tôles de guidage (13, 14, 15, 16 ; 44, 45) de chaque paire sont accrochées à leur extrémité supérieure à un axe de rotation commun (17, 18), et leurs extrémités éloignées de l'axe de rotation (18) peuvent être écartées l'une de l'autre par un mécanisme écarteur (33, 34 ; 35, 36) disposé entre les tôles de guidage (13, 14, 15, 16 ; 44, 45) de chaque paire.

3. Dispositif selon la revendication 1 ou 2, caractérisé en ce que les tôles de guidage (13, 14, 15, 16 ; 44, 45) sont resserrées par un ressort de traction (37, 38) disposé entre elles.

Fig. 1

Fig. 2

44

45

46

48

55

50

56

51

52

53

54

47

49

Fig. 3